# EUROPÄISCHE PATENTSCHRIFT

(11) **EP 0 584 387 B1**
(45) Veröffentlichungstag und Bekanntmachung des Hinweises auf die Patenterteilung: **18.11.1998**
(21) Anmeldenummer: 92114545.4
(22) Anmeldetag: 26.08.1992
(51) Int. Cl.: H04L 12/56, H04Q 11/04

(54) **Verfahren und Schaltungsanordnung zum Überwachen der Zellenreihenfolge bei der Übertragung von Nachrichtenzellen**
Method and circuit to monitor cell sequence during transmission of data cells
Procédé et circuit pour surveiller l'agencement de cellules pendant la transmission des cellules d'information

(43) Veröffentlichungstag der Anmeldung: 02.03.1994
(73) Patentinhaber: SIEMENS AKTIENGESELLSCHAFT, 80333 München (DE)
(72) Erfinder: Dickmann, Michael, Dipl.-Ing., W-8000 München 70 (DE)

(56) Entgegenhaltungen:
- WO-A-88/07293
- COMPUTER NETWORKS AND ISDN SYSTEMS Bd. 23, Nr. 4, Januar 1992, AMSTERDAM, NL Seiten 287 - 304 G. I. STASSINOPOULOS 'ATM Adaptation Layer Protocols for Signalling'

## Beschreibung

Die Erfindung betrifft ein Verfahren und eine Schaltungsanordnung gemäß Oberbegriff des Patentanspruches 1 bzw. des Patentanspruches 4.

Es ist bereits bekannt ("Integrated Broadband Networks", Rainer Händel, Manfred N. Huber, Addison-Wesley-Publishing Company, 1991, Seiten 92 bis 102), im Zuge von virtuellen Verbindungen Datenblöcke in Nachrichtenzellen fester Länge über ein nach einem asynchronen Transfermodus (ATM) arbeitendes ATM-Netz zu übertragen, wobei die Datenblöcke je nach ihrer Länge auf ein oder mehrere Nachrichtenzellen aufgeteilt werden. Dabei verfügt jede der Nachrichtenzellen für die Realisierung einer sogenannten ATM-Adaptionsschicht über eine Zellentyp-Kennung. Durch das Auftreten der Zellentyp-Kennung mit unterschiedlichen Codierungen wird dabei angezeigt, ob die jeweilige Nachrichtenzelle einen vollständigen Datenblock, einen ersten Abschnitt eines Datenblockes, einen mittleren Abschnitt eines Datenblockes oder den letzten Abschnitt eines Datenblockes enthält.

Darüber hinaus ist es bereits aus WO 88/07293 bekannt, in einem Multiplex-System Nachrichtensignale mit einer variablen Länge zu segmentieren und in Zeitschlitzen fester Länge zu übertragen. Dabei ist in jedem Zeitschlitz eine von drei Kennungen enthalten, aus welcher hervorgeht, ob das in dem jeweiligen Zeitschlitz enthaltene Segment den Beginn, die Fortsetzung oder das Ende einer Nachricht repräsentiert.

Es ist nun Aufgabe der vorliegenden Erfindung, einen Weg zu zeigen, wie bei einem Verfahren und einer Schaltungsanordnung der eingangs genannten Art eine Überprüfung der Zellenreihenfolge bei der Übertragung von Datenblöcken in Nachrichtenzellen anhand der diesen jeweils zugehörigen Zellentyp-Kennung durchgeführt werden kann.

Diese Aufgabe wird bei einem Verfahren der eingangs genannten Art durch die im Patentanspruch 1 angegebenen Verfahrensmerkmale gelöst. Die Erfindung bringt dabei den Vorteil mit sich, daß durch die Auswertung der Zellentyp-kennungen von Nachrichtenzellen anhand veränderlicher Erwartungswerte-Paare mit einem insgesamt geringen Steuerungsaufwand die Zellenreihenfolge von Nachrichtenzellen einer virtuellen Verbindung überwacht werden kann.

Vorteilhafte Ausgestaltungen des Verfahrens gemäß der vorliegenden Erfindung ergeben sich aus den Patentansprüchen 2 und 3. In diesen Patentansprüchen sind dabei zweckmäßige Alternativen für die Initialisierung der Erwartungswerte-Paare angegeben.

Die vorstehend aufgezeigte Aufgabe wird bei einer Schaltungsanordnung der eingangs genannten Art durch die im Patentanspruch 4 angegebenen schaltungstechnischen Merkmale gelöst. Der Vorteil dieser Schaltungsanordnung besteht dabei in dem geringen schaltungstechnischen Aufwand für die Auswertung der in den Nachrichtenzellen jeweils enthaltenen Zellentyp-Kennung.

Im folgenden wird nun die vorliegende Erfindung anhand von Zeichnungen beispielsweise näher erläutert.
FIG 1 zeigt in einem Blockschaltbild ein mit peripheren Datenübertragungseinrichtungen verbundenes ATM-Netz, in welchem die Erfindung angewandt ist, und
FIG 2 zeigt auschnittweise einen möglichen Aufbau der in FIG 1 lediglich schematisch dargestellten Datenübertragungseinrichtungen.

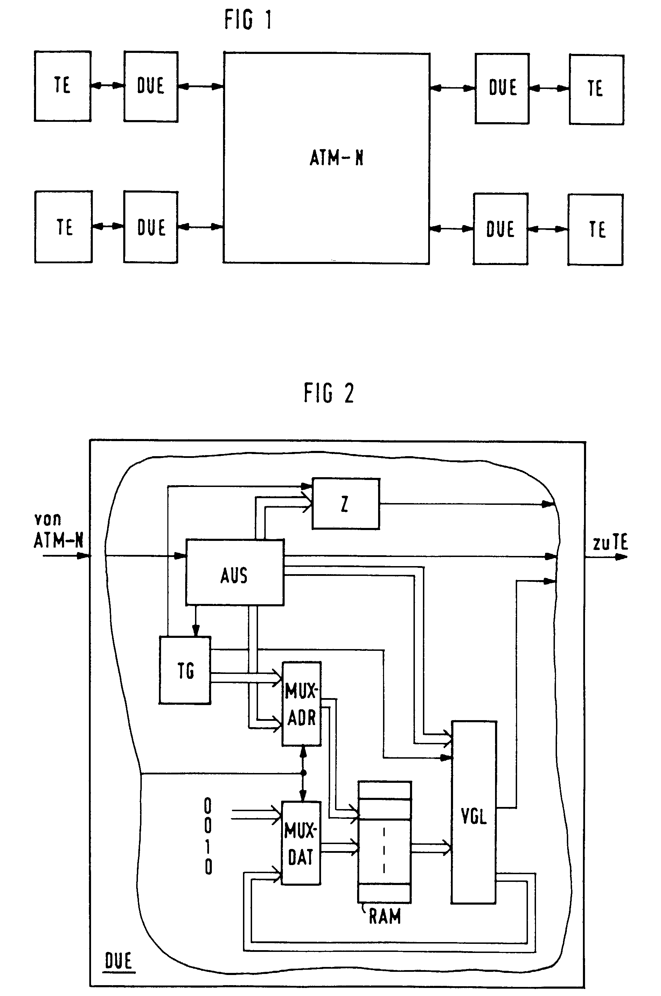

In FIG 1 ist ein nach einem asynchronen Ubertragungsverfahren ("Asynchronous Transfer Mode") arbeitendes ATM-Netz ATM-N schematisch dargestellt, an welches über Datenübertragungseinrichtungen DUE Teilnehmereinrichtungen TE angeschlossen sind. Das ATM-Netz möge dabei aus wenigstens einer ATM-Kommunikationseinrichtung beispielsweise in Form einer Vermittlungseinrichtung gebildet sein. Innerhalb dieses Netzes werden in bekannter Weise im Zuge von virtuellen Verbindungen Nachrichtenzellen fester Länge übertragen, welche jeweils aus einem Zellenkopf ("Header") sowie einem Informationsteil bestehen. In dem Zellenkopf ist dabei u.a. eine Information beispielsweise in Form einer virtuellen Kanalnummer VCI enthalten, durch welche die jeweilige virtuelle Verbindung bezeichnet ist. Der Zellenkopf umfaßt im allgemeinen 5 Oktetts. In dem Informationsteil, der im allgemeinen aus 48 Oktetts besteht, werden dagegen die eigentlichen Nutzdaten übertragen.

Von zumindest einem Teil der Teilnehmereinrichtungen TE mögen im Zuge wenigstens einer virtuellen Verbindung Datenblöcke abgegeben werden, die je nach ihrer Länge durch die zugehörige Datenübertragungseinrichtung DUE in eine oder mehrere Nachrichtenzellen der jeweiligen virtuellen Verbindung eingefügt werden. Dabei wird beispielsweise in das erste Oktett des Informationsteils der Nachrichtenzellen jeweils eine Zellentyp-Kennung eingetragen. Durch diese Zellentyp-Kennung, die beispielsweise aus 2 Bit gebildet sein möge, ist angegeben, ob die jeweilige Nachrichtenzelle einen vollständigen Datenblock, einen ersten Abschnitt eines Datenblockes, einen mittleren Abschnitt eines Datenblockes oder den letzten Abschnitt eines Datenblockes enthält. Hierfür können beispielsweise folgende 4 Codierungen verwendet werden:
- 00: vollständiger Datenblock
- 01: erster Abschnitt eines Datenblockes
- 10: mittlerer Abschnitt eines Datenblockes
- 11: letzter Abschnitt eines Datenblockes.

Durch die verbleibenden 6 Bits des ersten Oktetts des Informationsteiles einer Nachrichtenzelle kann darüber hinaus der Füllgrad des jeweiligen Informationsteiles angegeben werden.

Die im Zuge von virtuellen Verbindungen anschließend über das ATM-Netz ATM-N übertragenen Nachrichtenzellen werden durch die für die jeweilige virtuelle Verbindung in Frage kommende Datenübertragungseinrichtung DUE aufgenommen. Dabei werden die Zellentypen-Kennungen der einzelnen Nachrichtenzellen verbindungsindividuell ausgewertet. Dafür werden die Zellentyp-Kennungen von aufeinanderfolgenden Nachrichtenzellen ein und derselben virtuellen Verbindung mit festgelegten Erwartungswerte-Paaren für die Zellentyp-Kennung verglichen. Die Erwartungswerte-Paare sind dabei aus jeweils zwei der zuvor genannten Codierungen gebildet.

Im folgenden wird zunächst der Fall betrachtet, daß die Nachrichtenzellen einer virtuellen Verbindung in einer fehlerfreien Reihenfolge in der jeweiligen Datenübertragungseinrichtung eintreffen. Nach einer Initialisierung der Erwartungswerte-Paare, die für sämtliche über die jeweilige Datenübertragungseinrichtung DUE verlaufende virtuelle Verbindungen gemeinsam beispielsweise bei der Inbetriebnahme der jeweiligen Datenübertragungseinrichtung oder verbindungsindividuell während des Verbindungsaufbaues erfolgen kann, wird für die erste Nachrichtenzelle der jeweiligen virtuellen Verbindung entsprechend der vorstehend angenommenen Codierung für die Zellentyp-Kennung das Erwartungswerte-Paar 00 und 01 als Anfangs-Erwartungswerte-Paar festgelegt. Tritt nun eine Nachrichtenzelle mit einer Zellentyp-Kennung 00 oder 01 auf, so werden die in der gerade vorliegenden Nachrichtenzelle enthaltenen Nutzsignale an die jeweilige Teilnehmereinrichtung TE weitergeleitet. Darüber hinaus wird bei Vorliegen einer Zellentyp-Kennung 01 für eine Auswertung nachfolgender Nachrichtenzellen der jeweiligen virtuellen Verbindung das Anfangs-Erwartungswerte-Paar durch das Erwartungswerte-Paar 10 und 11 ersetzt.

Unter Berücksichtigung des nunmehr gültigen Erwartungswerte-Paares (10 und 11) werden die Nutzinformationen von nachfolgenden Nachrichtenzellen immer dann weitergeleitet, wenn die Nachrichtenzellen eine Zellentyp-Kennung 10 oder 11 aufweisen. Nach dem Auftreten einer Zellentyp-Kennung 11 wird dabei das bisher gültige Erwartungswerte-Paar (10 und 11) durch das Anfangs-Erwartungswerte-Paar 00 und 01 ersetzt, d. h. nachfolgend wird wieder eine Nachrichtenzelle mit einer Zellentyp-Kennung 00 und 01 erwartet.Von hier ab wiederholen sich dann die zuvor erläuterten Steuerungsvorgänge.

Vorstehend wurde zunächst von einer fehlerfreien Ubertragung von Nachrichtenzellen ausgegangen. Tritt nun der Fall ein, daß die Zellentyp-Kennung einer eintreffenden Nachrichtenzelle mit keiner der beiden Codierungen eines gerade gültigen Erwartungswerte-Paares übereinstimmt, so wird die gerade vorliegende Nachrichtenzelle vernichtet, d.h. die in dieser enthaltenen Nutzionformationen werden nicht weitergeleitet. Darüber hinaus wird das gerade gültige Erwartungswerte-Paar durch das Anfangs-Erwartungswerte-Paar ersetzt. Damit setzt im Zuge der jeweiligen virtuellen Verbindung die Weiterleitung von in Nachrichtenzellen enthaltenen Nutzinformationen erst auf das Auftreten einer Nachrichtenzelle mit einer Zellentyp-Kennung 00 oder 01 wieder ein.

In FIG 2 ist ausschnittweise der mögliche Aufbau einer der zuvor erwähnten Datenübertragungseinrichtungen DUE dargestellt, wobei lediglich die für die Realisierung der zuvor erläuterten Auswertevorgänge vorgesehenen Schaltungselemente wiedergegeben sind. Danach weist die jeweilige Datenübertragungseinrichtung einen Schreib-Lese-Speicher RAM mit einer festgelegten Anzahl von wahlfrei adressierbaren Speicherplätzen auf. Die Anzahl entspricht dabei der Anzahl der über die jeweilige Datenübertragungseinrichtung verlaufenden virtuellen Verbindungen. In jedem der Speicherplätze ist eines der zuvor genannten Erwartungswerte-Paare speicherbar. Mit Datenausgängen steht dieser Schreib-Lese-Speicher RAM mit ersten Eingängen einer Vergleicheranordnung VGL in Verbindung. Zweite Eingänge dieser Vergleicheranordnung sind mit einer Auswerteeinrichtung AUS verbunden, welcher die über das ATM-Netz übertragenen Nachrichtenzellen zugeführt sind. Die Vergleicheranordnung weist ausgangsseitig einen Steuersignalausgang sowie Datenausgänge auf, welche ersten Eingängen eines mit Dateneingängen des Schreib-Lese-Speichers RAM verbundenen Datenmultiplexers MUX-DAT zugeführt sind. Weitere Eingänge dieses Datenmultiplexers sind mit logischen Pegeln beaufschlagt, die dem zuvor genannten Anfangs-Erwartungswerte-Paar entsprechen.

Der Schreib-Lese-Speicher RAM ist darüber hinaus über Adresseneingänge mit einem Adressenmultiplexer MUX-ADR verbunden, der zusammen mit dem Datenmultiplexer über eine Steuerleitung umsteuerbar ist. Eingangsseitig steht dieser Adressenmultiplexer einerseits mit der bereits genannten Auswerteeinrichtung AUS und andererseits mit einem Taktgenerator TG in Verbindung. Dieser Taktgenerator ist zusätzlich über eine Taktleitung an die Vergleicheranordnung VGL angeschlossen.

Die Auswerteeinrichtung AUS ist im übrigen über weitere Ausgänge mit Ladeeingängen einer Zähleranordnung Z verbunden.

Für eine Initialisierung der zuvor genannten Erwartungswerte-Paare, die für sämtliche möglichen virtuellen Verbindungen gemeinsam erfolgen möge, werden die beiden Multiplexer, d.h. der Datenmultiplexer MUX-DAT und der Adressenmultiplexer MUX-ADR, so gesteuert, daß dem Schreib-Lese-Speicher RAM einerseits von dem Taktgenerator TG her an den Adresseneingängen nacheinander die einzelnen Speicherplätze bezeichnende Adressensignale mit zugehörigen Schreibtaktsignalen und andererseits an den Dateneingängen die dem genannten Anfangs-Erwartungswerte-Paar entsprechenden Bits (0D und 01) zugeführt sind. Damit wird die dem Anfangs-Erwartungswerte-Paar entsprechende Bitkombination nacheinander in die einzelnen Speicherplätze eingetragen.

Die der Datenübertragungseinrichtung im Zuge von virtuellen Verbindungen zugeführten Nachrichtenzellen durchlaufen die Auswerteeinrichtung AUS. Dabei wird bei Eintreffen einer Nachrichtenzelle zunächst deren Zellenkopf ausgewertet. Nach Maßgabe der darin enthaltenen Verbindungsangaben wird im Zuge eines Steuerzyklus der für die jeweilige virtuelle Verbindung in Frage kommende Speicherplatz des Schreib-Lese-Speicher RAM für eine Abgabe des darin gerade gespeicherten Erwartungswertes-Paares an die Vergleicheranordnung VGL angesteuert. Außerdem erhält diese von der Auswerteeinrichtung AUS her die in dem ersten Oktett nach dem Zellenkopf enthaltene Zellentyp-Kennung zugeführt. Die Ubereinstimmung bzw. Nichtübereinstimmung dieser Zellentyp-Kennung mit dem gerade zugeführten Erwartungswerte-Paar wird dabei von der Vergleicheranordnung mit einem entsprechenden Steuersignal an dem genannten Steuersignalausgang angezeigt. Dabei erfolgt, wie bereits oben erläutert, eine Weiterleitung der in der gerade auftretenden Nachrichtenzelle enthaltenen Nutzinformationen lediglich dann, wenn durch das jeweilige Steuersignal eine Ubereinstimmung angezeigt ist.

Darüber hinaus überprüft die Vergleicheranordnung VGL, ob aufgrund der gerade vorliegenden Zellentyp-Kennung eine Änderung des bisher gültigen Erwartungswerte-Paares erforderlich ist. Ist dies der Fall, so wird das neue Erwartungswerte-Paar von der Vergleicheranordnung bereitgestellt und dem Schreib-Lese-Speicher RAM über den Datenmultiplexer MUX-DAT zugeführt. Dabei wird dieses neue Erwartungswerte-Paar in dem gerade angesteuerten Speicherplatz eingetragen und zwar unter Uberschreiben des bisher darin gespeicherten Erwartungswerte-Paares.

Darüber hinaus entnimmt die Auswerteeinrichtung AUS der gerade vorliegenden Nachrichtenzelle die bereits oben erwähnten Füllgradangaben. Diese werden der Zähleranordnung Z als Anfangszählerstand zugeführt. Ausgehend von diesem Anfangszählerstand wird dann mit jedem Oktett des Informationsteiles der vorliegenden Nachrichtenzelle der Zählerstand dekrementiert. Hierfür erhält die Zähleranordnung von dem Taktgenerator TG her entsprechende Taktsignale zugeführt.Bei Auftreten des Zählerstandes "0" gibt die Zähleranordnung Z ein Zählsignal ab, durch welches einer nachfolgenden Einrichtung das Ende der Nutzinformation der gerade vorliegenden Nachrichtenzelle angezeigt ist. Nach diesem Zählsignal ggf. noch auftretende Oktetts der gerade vorliegenden Nachrichtenzelle werden dabei nicht mehr in die betreffende Einrichtung übernommen.

Damit ist der aufgrund des Auftretens einer Nachrichtenzelle aktivierte Steuerzyklus abgeschlossen. Ein solcher Steuerzyklus wiederholt sich dann mit jedem weiteren Auftreten einer Nachrichtenzelle. Die zeitliche Steuerung der einzelnen Verfahrensschritte innerhalb eines solchen Steuerzyklus erfolgt im übrigen unter der Steuerung des Taktgenerators TG, welcher der Vergleicheranordnung VGL über die oben genannte Taktleitung entsprechende Taktsignale zuführt.

## Patentansprüche

1. Verfahren zum Überwachen der Zellenreihenfolge bei der Übertragung von Datenblöcken in Nachrichtenzellen fester Länge im Zuge wenigstens einer virtuellen Verbindung über ein nach einem asynchronen Transfermodus (ATM) arbeitendes ATM-Netz (ATM-N) mit wenigstens einer ATM-Kommunikationseinrichtung in mit der jeweiligen ATM-Kommunikationseinrichtung verbundenen Empfangseinrichtungen (DUE), wobei die Datenblöcke einer virtuellen Verbindung je nach deren Länge jeweils abschnittsweise auf eine oder mehrere Nachrichtenzellen aufgeteilt werden und dabei jede Nachrichtenzelle über eine Zellentyp-Kennung verfügt,
durch deren Auftreten mit einer ersten Codierung das Vorliegen einer einen vollständigen Datenblock enthaltenden Nachrichtenzelle,
mit einer zweiten Codierung das Vorliegen einer einen ersten Abschnitt eines Datenblockes enthaltenden Nachrichtenzelle,
mit einer dritten Codierung das Vorliegen einer einen mittleren Abschnitt eines Datenblockes enthaltenden Nachrichtenzelle
und durch deren Auftreten mit einer vierten Codierung das Vorliegen einer einen letzten Abschnitt eines Datenblockes enthaltenden Nachrichtenzelle angezeigt wird,
**dadurch gekennzeichnet,**
daß in der jeweiligen Empfangseinrichtung (DUE) verbindungsindividuell auf jedes Auftreten einer Nachrichtenzelle hin die Codierung der zugehörigen Zellentyp-Kennung mit einem festgelegten Erwartungswerte-Paar verglichen wird,
daß als gültiges Erwartungswerte-Paar dabei nach einer Initialisierung zunächst die erste und zweite Codierung festgelegt wird,
daß unter Berücksichtigung dieses Erwartungswerte-Paares lediglich bei einer Übereinstimmung der nach der Initialisierung als nächste auftretenden Zellentyp-Kennung mit der zweiten Codierung als neues gültiges Erwartungswerte-Paar die dritte und vierte Codierung festgelegt wird, daß unter Berücksichtigung des nunmehr gültigen Erwartungswerte-Paares lediglich bei einer Übereinstimmung der nächsten Zellentyp-Kennung mit der vierten Codierung als gültiges Erwartungswerte-Paar wieder die erste und zweite Codierung festgelegt wird
und daß bei Nichtübereinstimmung der Codierung einer Zellentyp-Kennung mit einer der Codierungen des gerade gültigen Erwartungswerte-Paares einerseits die Nichteinhaltung der Zellenreihenfolge angezeigt und andererseits als Erwartungswerte-Paar zunächst wieder die erste und zweite Codierung festgelegt wird.

2. Verfahren nach Anspruch 1,
**dadurch gekennzeichnet,**
daß die Initialisierung der Erwartungswerte-Paare für sämtliche möglichen virtuellen Verbindungen mit der Inbetriebnahme der jeweiligen Empfangseinrichtung (DUE) erfolgt.

3. Verfahren nach Anspruch 1,
**dadurch gekennzeichnet,**
daß die Initialisierung des Erwartungswerte-Paares für die jeweilige virtuelle Verbindung im Zuge des Verbindungsaufbaus erfolgt.

4. Schaltungsanordnung zum Überwachen der Zellenreihenfolge bei der Übertragung von Datenblöcken in Nachrichtenzellen fester Länge im Zuge wenigstens einer virtuellen Verbindung über ein nach einem asynchronen Transfermodus (ATM) arbeitendes ATM-Netz (ATM-N) mit wenigstens einer ATM-Kommunikationseinrichtung in mit der jeweiligen ATM-Kommunikationseinrichtung verbundenen Empfangseinrichtungen (DUE), wobei die Datenblöcke einer virtuellen Verbindung je nach deren Länge jeweils abschnittsweise auf eine oder mehrere Nachrichtenzellen aufgeteilt werden und dabei jede Nachrichtenzelle über eine Zellentyp-Kennung verfügt,
durch deren Auftreten mit einer ersten Codierung das Vorliegen einer einen vollständigen Datenblock enthaltenden Nachrichtenzelle,
mit einer zweiten Codierung das Vorliegen einer einen ersten Abschnitt eines Datenblockes enthaltenden Nachrichtenzelle,
mit einer dritten Codierung das Vorliegen einer einen mittleren Abschnitt eines Datenblockes enthaltenden Nachrichtenzelle
und durch deren Auftreten mit einer vierten Codierung das Vorliegen einer einen letzten Abschnitt eines Datenblockes enthaltenden Nachrichtenzelle angezeigt wird,
zur Durchführung des Verfahrens nach Anspruch 1,
**dadurch gekennzeichnet,**
daß in der jeweiligen Empfangseinrichtung (DUE) Speichermittel (RAM) mit einer der Anzahl der möglichen virtuellen Verbindungen entsprechenden Anzahl von Speicherplätzen zum Speichern jeweils eines Erwartungswerte-Paares vorgesehen sind,
daß Steuermittel vorgesehen und derart ausgebildet sind, daß in die einzelnen Speicherplätze im Zuge einer Initialisierung ein festgelegtes Erwartungswerte-Paar eintragbar ist und daß die einzelnen Speicherplätze bei Auftreten von Nachrichtenzellen nach Maßgabe des in diesen jeweils enthaltenen, die jeweilige virtuelle Verbindung bezeichnenden Zellenkopfes individuell in einen Steuerzyklus einbeziehbar sind,
und daß Vergleichermittel (VGL) vorgesehen und derart ausgebildet sind, daß im Verlauf eines Steuerzyklus zunächst das in dem jeweiligen Speicherplatz gerade gespeicherte Erwartungswerte-Paar mit der Codierung der Zellentyp-Kennung der gerade vorliegenden Nachrichtenzelle verglichen wird, wobei einerseits bei einer Nichtübereinstimmung der Codierung der Zellentyp- Kennung der vorliegenden Nachrichtenzelle mit einer der Codierungen des Erwartungswerte-Paares ein Fehlersignal bereitgestellt ist und andererseits zumindest bei einer nach Maßgabe des Vergleichsergebnisses erforderlichen Änderung des bisherigen Erwartungswerte-Paares das in Frage kommende Erwartungswerte-Paar in den gerade angesteuerten Speicherplatz unter Überschreiben des bisher darin gespeicherten Erwartungswerte-Paares eingetragen wird, wobei die Schaltungsanordnung derart ausgebildet ist,
daß als gültiges Erwartungswerte-Paar dabei nach einer Initialisierung zunächst die erste und zweite Codierung festgelegt wird,
daß unter Berücksichtigung dieses Erwartungswerte-Paares lediglich bei einer Übereinstimmung der nach der Initialisierung als nächste auftretenden Zellentyp-Kennung mit der zweiten Codierung als neues gültiges Erwartungswerte-Paar die dritte und vierte Codierung festgelegt wird, daß unter Berücksichtigung des nunmehr gültigen Erwartungswerte-Paares lediglich bei einer Übereinstimmung der nächsten Zellentyp-Kennung mit der vierten Codierung als gültiges Erwartungswerte-Paar wieder die erste und zweite Codierung festgelegt wird
und daß bei Nichtübereinstimmung der Codierung einer Zellentyp-Kennung mit einer der Codierungen des gerade gültigen Erwartungswerte-Paares als Erwartungswerte-Paar zunächst wieder die erste und zweite Codierung festgelegt wird.

## Claims

1. Method for monitoring the cell sequence during the transmission of data blocks in information cells with a fixed length in the course of at least one virtual connection via an ATM network (ATM-N) which operates according to an asynchronous transfer mode (ATM) and has at least one ATM communications device in receivers (DUE) which are connected to the respective ATM communications device, the data blocks of a virtual connection being assigned, depending on their length, in each case on a section basis to one or more information cells and in this context each information cell having a cell type identifier,
whose occurrence with a first code indicates the presence of a information cell containing a complete data block,
whose occurrence with a second code indicates the presence of a information cell containing a first section of a data block,
whose occurrence with a third code indicates the presence of a information cell containing a central section of a data block,
and whose occurrence with a fourth code indicates the presence of a information cell containing a last section of a data block, characterized
in that in response to each occurrence of a information cell the coding of the respective cell type identifier is compared in the respective receiver (DUE), on a connection-specific basis, with a defined pair of anticipated values,
in that, in the process, after initialization the first and second codes are initially defined as a valid pair of anticipated values,
in that, taking into account this pair of anticipated values, the third and fourth codes are defined as the new valid pair of anticipated values only if the next cell type identifier occurring after the initialization corresponds to the second code,
in that, taking into account the pair of anticipated values which is now valid, the first and second codes are defined as the valid pair of anticipated values only if the next cell type identifier corresponds to the fourth code,
and in that, if the code of a cell type identifier does not correspond to one of the codes of the currently valid pair of anticipated values, on the one hand the non-compliance of the cell sequence is indicated and, on the other hand, the first and second codes are initially defined again as the pair of anticipated values.

2. Method according to Claim 1, characterized in that the initialization of the pairs of anticipated values for all the possible virtual connections takes place when the respective receiver (DUE) is activated.

3. Method according to Claim 1, characterized in that the initialization of the pair of anticipated values for the respective virtual connection takes place in the course of the connection setup.

4. Circuit for monitoring the cell sequence during the transmission of data blocks in information cells with a fixed length in the course of at least one virtual connection via an ATM network (ATM-N) which operates according to an asynchronous transfer mode (ATM) and has at least one ATM communications device in receivers (DUE) which are connected to the respective ATM communications device, the data blocks of a virtual connection being assigned, depending on their length, in each case on a section basis to one or more information cells and in this context each information cell having a cell type identifier,
whose occurrence with a first code indicates the presence of a information cell containing a complete data block,
whose occurrence with a second code indicates the presence of a information cell containing a first section of a data block,
whose occurrence with a third code indicates the presence of a information cell containing a central section of a data block,
and whose occurrence with a fourth code indicates the presence of a information cell containing a last section of a data block,
in order to carry out the method according to Claim 1, characterized in that provided in the respective receiver (DUE) are memory means (RAM) with a number of memory locations corresponding to the number of possible virtual connections, for storing in each case one pair of anticipated values,
in that memory means are provided and are designed in such a way that a defined pair of anticipated values can be entered into the individual memory locations in the course of an initialization,
and in that, when information cells occur in accordance with the cell header which is respectively contained in said cells and which designates the respective virtual connection, the individual memory locations can be included individually in a control cycle,
and in that comparator means (VGL) are provided and are constructed in such a way that, in the course of a control cycle, initially the pair of anticipated values which have just been stored in the respective memory location is compared with the code of the cell type identifier of the currently present information cell, in which case, on the one hand, an error signal is made available if the code of the cell type identifier of the present information cell does not correspond to one of the codes of the pair of anticipated values and, on the other hand, at least in the case of a change in the previous pair of anticipated values, which change is required in accordance with the result of the comparison, the pair of anticipated values in question is entered into the currently actuated memory location by overwriting the pair of anticipated values previously stored therein, the circuit being designed in such a way that initially the first and second codes are defined as the valid pair of anticipated values after an initialization,
in that, taking into account this pair of anticipated values, the third and fourth codes are defined as the new valid pair of anticipated values only if the next cell type identifier occurring after the initialization corresponds to the second code,
in that, taking into account the pair of anticipated values which is now valid, the first and second codes are defined again as the valid pair of anticipated values only if the next cell type identifier corresponds to the fourth code,
and in that if the code of a cell type identifier does not correspond to one of the codes of the currently valid pair of anticipated values, the first and second codes are initially defined again as the pair of anticipated values.

## Revendications

1. Procédé pour surveiller la séquence de cellules lors de la transmission de blocs de données dans des cellules d'information de longueur fixe à la suite d'au moins une liaison virtuelle par l'intermédiaire d'un réseau (ATM-N, ATM) fonctionnant suivant un mode de transfert asynchrone (ATM), comportant au moins un dispositif de communication (ATM) dans des dispositifs (DUE) de réception reliés aux dispositifs de communication (ATM) associés, les blocs de données d'une liaison virtuelle étant, suivant leur longueur, répartis par partie sur une cellule d'information ou plusieurs cellules d'information et chaque cellule d'information disposant d'une caractéristique de type de cellule dont l'apparition avec un premier code indique la présence d'une cellule d'information contenant un bloc de données complet, dont l'apparition avec un deuxième code indique la présence d'une cellule d'information contenant une première partie d'un bloc de données, dont l'apparition avec un troisième code indique la présence d'une cellule d'information contenant une partie médiane d'un bloc de données et dont l'apparition avec un quatrième code indique la présence d'une cellule d'information contenant une dernière partie d'un bloc de données, caractérisé en ce que, dans le dispositif (DUE) de réception associé, à chaque apparition d'une cellule d'information, le code de la caractéristique de type de cellule associée est comparé de manière spécifique à la liaison à un couple de valeurs escomptées fixé, en ce que, après une initialisation, on fixe comme couple de valeurs escomptées valable d'abord le premier code et le deuxième code, en ce que, en tenant compte de ce couple de valeurs escomptées, on ne fixe comme nouveau couple de valeurs escomptées valable le troisième et le quatrième code qu'en cas de coïncidence de la caractéristique de type de cellule apparaissant en premier après l'initialisation avec le deuxième code, en ce que, en tenant compte du couple de valeurs escomptées maintenant valable, on ne fixe à nouveau comme couple de valeurs escomptées valable le premier et le deuxième code qu'en cas d'une coïncidence de la caractéristique de type de cellule suivante avec le quatrième code et en ce que, en cas de non-coïncidence du code d'une caractéristique de type de cellule avec l'un des codes du couple de valeurs escomptées justement valable, on indique le non-respect de la séquence de cellules, d'une part, et on fixe comme couple de valeurs escomptées à nouveau d'abord le premier et le deuxième code, d'autre part.

2. Procédé suivant la revendication 1, caractérisé en ce que l'on effectue l'initialisation des couples de valeurs escomptées pour toutes les liaisons virtuelles possibles par la mise en service du dispositif (DUE) de réception associé.

3. Procédé suivant la revendication 1, caractérisé en ce que l'on effectue l'initialisation du couple de valeurs escomptées pour la liaison virtuelle associée à la suite de l'établissement de la liaison.

4. Montage pour surveiller la séquence de cellules lors de la transmission de blocs de données dans des cellules d'information de longueur fixe à la suite d'au moins une liaison virtuelle par l'intermédiaire d'un réseau (ATM-N, ATM) fonctionnant suivant un mode de transfert asynchrone (ATM), comportant au moins un dispositif de communication (ATM) dans des dispositifs (DUE) de réception reliés aux dispositif de communication (ATM) associés, les blocs de données d'une liaison virtuelle étant répartis, suivant leur longueur, par parties sur une cellule d'information ou plusieurs cellules d'information et chaque cellule d'information disposant d'une caractéristique de type de cellule dont l'apparition avec un premier code indique la présence d'une cellule d'information contenant un bloc de données complet, dont l'apparition avec un deuxième code indique la présence d'une cellule d'information contenant une première partie d'un bloc de données, dont l'apparition avec un troisième code indique la présence d'une cellule d'information contenant une partie médiane d'un bloc de données et dont l'apparition avec un quatrième code indique la présence d'une cellule d'information contenant une dernière partie d'un bloc de données, pour la mise en oeuvre du procédé suivant la revendication 1, caractérisé en ce qu'il est prévu dans le dispositif (DUE) de réception associé des moyens (RAM) de mémorisation comportant un nombre d'emplacements de mémoire correspondant au nombre des liaisons virtuelles possibles pour mémoriser chaque couple de valeurs escomptées, en ce qu'il est prévu des moyens de commande et que ces moyens de commande sont réalisés de telle manière qu'un couple de valeurs escomptées fixé peut être entré dans les emplacements de mémoire individuelle à la suite d'une initialisation et que les emplacements de mémoire individuelle peuvent, en cas d'apparition de cellules d'information, être intégrés individuellement dans un cycle de commande après donnée de l'en-tête de cellule contenue dans les cellules d'information et désignant la liaison virtuelle associée, et en ce qu'il est prévu des moyens (VGL) de comparaison et que ces moyens sont réalisés de telle manière que, au cours d'un cycle de commande, d'abord le couple de valeurs escomptées justement mémorisé à l'emplacement de mémoire associé est comparé au code de la caractéristique de type de cellule de la cellule d'information justement présente, un signal d'erreur étant préparé en cas de non-coïncidence du codage de la caractéristique de type de cellule de la cellule d'information présente avec l'un des codes du couple de valeurs escomptées, d'une part, et, au moins en cas de modification des couples de valeurs escomptées présents jusqu'ici nécessaires suivant la donnée du résultat de comparaison, le couple de valeurs escomptées en question étant entré à l'emplacement de mémoire justement commandé en réécrivant sur le couple de valeurs escomptées qui y est mémorisé jusqu'ici, d'autre part, que, après une initialisation, le premier et le deuxième codes sont d'abord fixés comme couple de valeurs escomptées valable, que, en tenant compte de ce couple de valeurs escomptées, le troisième et le quatrième codes ne sont fixés comme nouveau couple de valeurs escomptées valable qu'en cas d'une coïncidence de la caractéristique de type de cellule apparaissant en premier après l'initialisation avec le deuxième code, que, en tenant compte du couple de valeurs escomptées maintenant valable, le premier et le deuxième codes ne sont à nouveau fixés comme couple de valeurs escomptées valable qu'en cas d'une coïncidence de la caractéristique de type de cellule suivante avec le quatrième code et que, en cas de non-coïncidence du code d'une caractéristique de type de cellule avec l'un des codes du couple de valeurs escomptées justement valable, d'abord le premier et le deuxième codes sont à nouveau fixés comme couple de valeurs escomptées.
